Europäisches Patentamt

European Patent Office

Office européen des brevets

(19)

(11) Numéro de publication: **0 214 890**
**B1**

(12) **FASCICULE DE BREVET EUROPEEN**

(45) Date de publication du fascicule du brevet:
**12.04.89**

(21) Numéro de dépôt: **86401749.6**

(22) Date de dépôt: **05.08.86**

(51) Int. Cl.⁴: **B 65 G 5/00**

(54) Dispositif de sécurité pour tube de remplissage de stockage souterrain de gaz liquéfié sous pression.

(30) Priorité: **13.08.85 FR 8512321**

(43) Date de publication de la demande:
**18.03.87 Bulletin 87/12**

(45) Mention de la délivrance du brevet:
**12.04.89 Bulletin 89/15**

(84) Etats contractants désignés:
**DE GB IT SE**

(56) Documents cités:
**EP-A- 0 013 854**
**GB-A- 252 127**
**GB-A- 724 174**

(73) Titulaire: **Société Française de Stockage Géologique "GEOSTOCK" (Société à responsabilité limitée), Tour Aurore - Cédex No 5, F-92080 Paris La Défense 2 (FR)**

(72) Inventeur: **Berezoutzky, Georges, 13 rue de Nangis Nouveau Village, F-77240 Cesson (FR)**

(74) Mandataire: **Pinguet, André, CAPRI 28 bis, avenue Mozart, F-75016 Paris (FR)**

ACTORUM AG

**Description**

La présente invention concerne les dispositifs de stockages souterrains de gaz liquéfiés sous pression, tels que butane et propane, à l'intérieur de cavités formées dans des massifs imprégnés d'eau (nappe phréatique), la pression hydrostatique au niveau de la cavité étant mise à profit pour équilibrer la pression de liquéfaction du gaz. L'invention a plus particulièrement pour objet un dispositif de sécurité pour tube de remplissage d'un tel stockage.

L'exploitation du stockage se fait par extraction ou introduction de produit liquide, ce qui a pour effet de déplacer la surface d'équilibre liquide-gaz. L'interface eau-phase liquide est maintenue à un niveau sensiblement constant, c'est-à-dire entre deux niveaux assez rapprochés: les pompes d'exhaure se mettent en marche dès que l'eau atteint un niveau supérieur déterminé, et s'arrêtent dès que l'interface eau-liquide descend à un niveau inférieur déterminé.

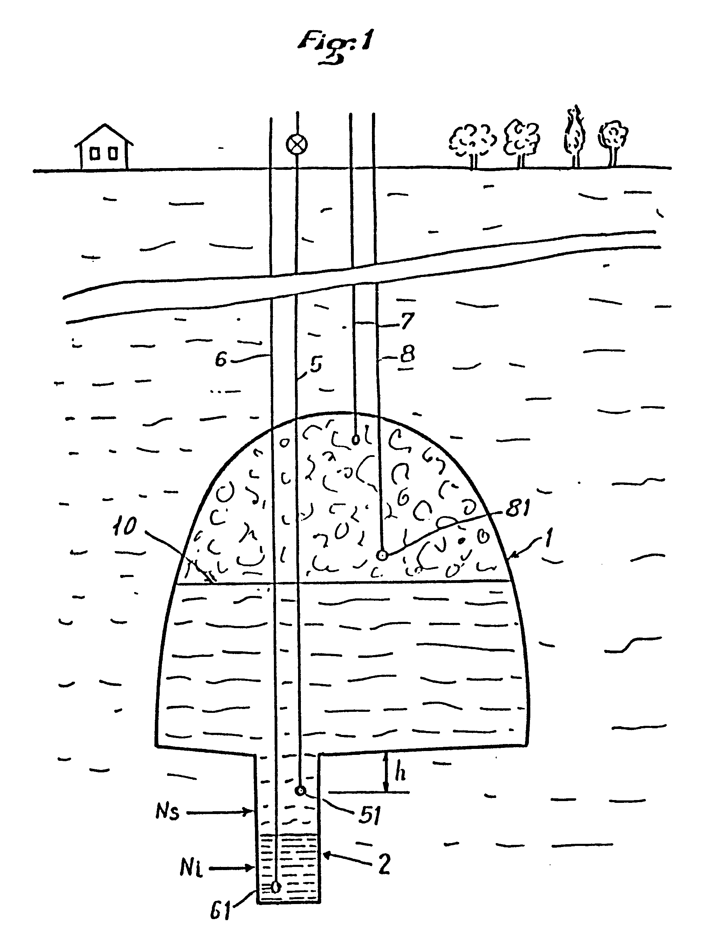

La figure 1 des dessins ci-joints représente schématiquement un tel stockage tel qu'il en existe de nombreux actuellement. On supposera, uniquement pour simplifier le vocabulaire que le produit stocké est du butane. Mais bien entendu, ce pourrait être tout autre gaz liquéfiable sous pression, de densité liquide inférieure à celle de l'eau et non miscible à l'eau.

La cavité 1 est complétée vers le bas par un puisard 2 creusé dans le radier 3. On a représenté schématiquement quatre conduits d'exploitation: un tube 5 pour l'extraction du butane liquide; un tube 6 pour le pompage de l'eau d'exhaure; un tube 7 d'évent gazeux débouchant dans le ciel de la cavité; et un tube 8 pour l'introduction de butane liquide. L'introduction de butane, par ce dernier tube 8, peut se faire en pluie, l'orifice 81 étant alors situé dans la partie supérieure de la cavité, ou en source, l'orifice 81 étant alors situé dans le fond de la cavité, ou à la partie supérieure du puisard 2.

L'orifice 61 d'aspiration d'eau est prévu au voisinage du fond du puisard, et les commandes de la (ou des) pompe sont prévues pour maintenir le niveau de l'eau entre deux niveaux: un niveau supérieur Ns et un nuveau inférieur Ni. Tout ceci est classique. L'orifice 51 d'aspiration de butane liquide est placé à une certaine profondeur h dans le puisard, au-dessus de Ns.

Il est connu, pour assurer l'arrêt de l'exploitation du stockage et sa mise en sommeil en sécurité, de remplir d'eau certains au moins des tubes d'exploitation, ou éventuellement de laisser l'eau remonter dans ces tubes, jusqu'à une hauteur Il telle que l'ensemble soit en équilibre hydrostatique. Pour permettre d'effectuer cette opération avec sûreté, on prévoit de placer par exemple l'orifice d'aspiration 51 du butane à une profondeur h dans le puisard, suffisante pour que le volume de puisard restant au-dessus soit supérieur au volume de la colonne d'eau dans le tube jusqu'à la hauteur Il d'équilibre. Si S est la section du puisard, et s la section du (ou des) tube à remplir, h est déterminé par la condition

$$h.S > H.s$$

Cette méthode d'isolation du stockage vis-à-vis de l'atmosphère extérieure est très avantageuse dans la mesure ou elle ne fait intervenir aucun dispositif mécanique. Il n'y a donc pas à craindre de défaillance de ce système de sécurité. Pour la même raison, son déclenchement est automatique dès l'ouverture des tubes en surface. Enfin on conviendra que sa mise en œuvre est particulièrement économique.

Le brevet EP 0 013 854 divulgue un pot placé du fond du puisard et dans lequel le tube 5 d'extraction du produit liquide s'engage. C'est désormais le bord supérieur du pot qui est assigné à la profondeur h par rapport au radier de la cavité. L'orifice d'aspiration 51 peut alors être placé plus librement. Si l'existence de ce pot présente d'autres avantages encore (protection de la pompe d'extraction, amélioration de son amorçage...), il n'en reste pas moins disposé dans le puisard 2 afin que l'eau d'exhaure puisse le cas échéant le remplir.

Il serait pourtant intéressant d'assurer de façon similaire la sécurité des divers tubes plongeurs de la cavité sans pour autant les faire déboucher dans ce puisard 2. En particulier, pour différentes raisons, le remplissage en pluie est recherché. Et l'on souhaite plutôt placer l'orifice 81 dans le ciel de la cavité, c'est-à-dire dans la partie supérieure qui est toujours occupée par la phase gazeuse.

Comment peut-on dès lors mettre ce tube en sécurité en période de sommeil au moyen d'une colonne d'eau équilibrant la pression interne alors qu'aucune réserve d'eau ne se trouve à proximité de son orifice inférieur?

C'est ainsi que, conformément à la présente invention, un pot ouvert à sa partie supérieure et de section supérieure à celle du tube de remplissage en pluie est engagé autour de l'extrémité de ce tube de sorte que le fond dudit pot soit proche de ladite extrémité sans toutefois la toucher, le volume dudit pot étant supérieur au volume de la colonne d'eau pouvant équilibrer à l'intérieur dudit tube la pression régnant dans la cavité de stockage.

La figure 1 des dessins ci-joints est une vue en coupe schématique d'un stockage souterrain classique.

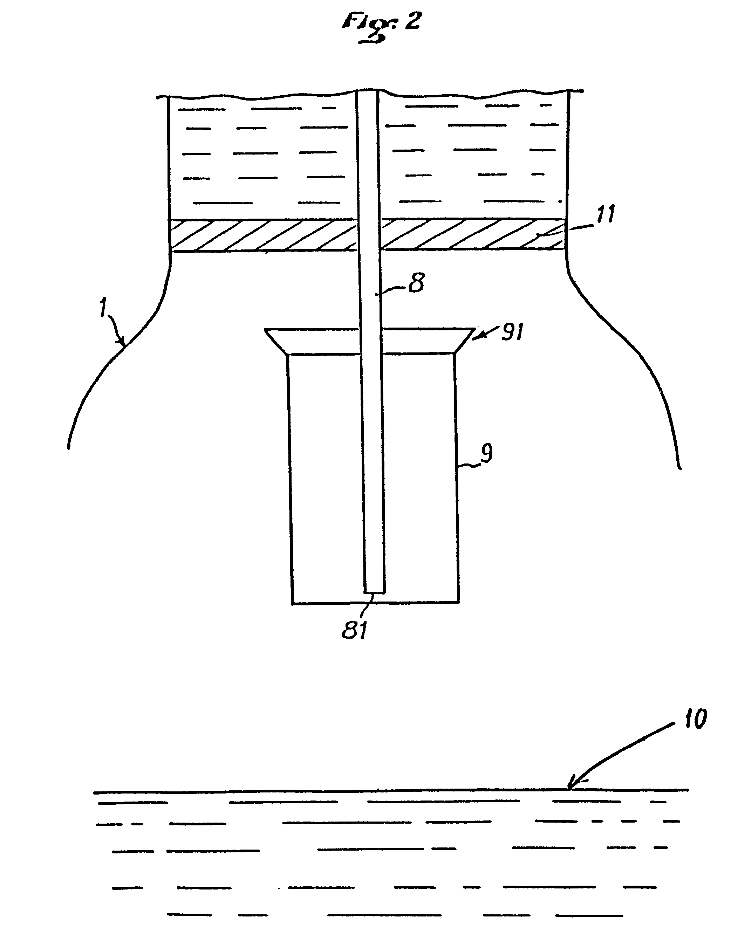

La figure 2 est une vue en coupe schématique de l'extrémité inférieure d'un tube d'introduction de produit liquide dans le ciel de la cavité.

Conformément à la présente invention, l'extrémité inférieure 81 du tube d'introduction du produit liquide débouche au fond d'un pot 9, dont le bord supérieur 91 est situé à un niveau supérieur au niveau 10 de la phase liquide. On à représenté un bouchon de béton 11 formé pour obturer le puits d'accès à la cavité 1. Le volume du pot est supérieur au volume du tube 8 sur une hauteur d'eau correspondant à la pression maxima prévue pour la cavité. L'introduction de produit liquide dans la cavité se fait en pompant ce liquide de haut en bas dans le tube 8, le liquide remonte dans le pot 9 autour du tube 8 et tombe en pluie à partir du bord 91 du pot. Pour mettre la cavité en sommeil, on pompe de l'eau, de haut en bas, dans le tube 8 jusqu'à ce que le pot 9 soit plein. Après quoi, on ouvre une vanne en haut du tube 8 et on laisse l'équilibre s'établir. Le pot 9 étant plein d'eau, on est assuré que la pression du gaz à la surface de l'eau, qui peut chasser éventuellement l'eau dans le tube 8 vers le haut selon la hauteur qu'elle en contient, ne pourra se vider et que le liquide ne pourra parvenir à l'extrémité inférieure et remonter dedans. On parviendra ainsi à l'équilibre hydrostatique.

## Revendication

Dispositif de sécurité pour un tube (8) d'introduction à l'état liquide d'un produit gazeux à température ordinaire, liquéfié sous pression, de densité inférieure à celle de l'eau et non miscible à l'eau, dans une cavité (1) souterraine en massif imprégné d'eau, sous la pression d'équilibre liquide-gaz à la température ambiante, une extrémité (81) dudit tube (8) d'introduction débouchant dans le ciel de ladite cavité (1) au-dessus de l'interface (10) gaz-liquide, caractérisé en ce qu'un pot (9) ouvert à sa partie supérieure et de section supérieure à celle dudit tube (8) d'introduction est engagé autour de ladite extrémité (81) dudit tube (8) d'introduction de sorte que le fond dudit pot (9) soit proche de ladite extrémité (81) sans toutefois la toucher, le volume dudit pot (9) étant supérieur au volume de la colonne d'eau pouvant équilibrer à l'intérieur dudit tube (8) d'introduction la pression dudit produit régnant dans ladite cavité (1).

## Patentanspruch

Sicherheitsvorrichtung für ein Rohr (8) zur Einführung im flüssigen Zustand eines unter Druck verflüssigten gasförmigen Produkts mit normaler Temperatur, dessen Dichte geringer ist als die des Wassers und das nicht mit Wasser mischbar ist, in einen unterirdischen Hohlraum (1) eines mit Wasser getränkten Gesteins, unter dem Gleichgewichtsdruck Flüssigkeit-Gas bei Umgebungstemperatur, wobei ein Ende (81) des Einführungsrohrs (8) in dem Dom des Hohlraums (1) oberhalb der Trennfläche (10) zwischen Gas und Flüssigkeit mündet, dadurch gekennzeichnet, daß ein in seinem oberen Bereich offener Topf (9) größeren Querschnitts als das Einführungsrohr (8) das Ende (81) des Einführungsrohrs (8) so umschließt, daß der Boden des Topfes (9) sich nahe dem Ende (81) befindet, ohne es jedoch zu berühren, wobei das Volumen des Topfes (9) größer ist als das Volumen der Wassersäule, die im Inneren des Einführungsrohrs (8) den in dem Hohlraum (1) herrschenden Druck des Produkts ausgleichen kann.

## Claim

A safety device for an insertion tube (8) for inserting a liquid into an underground cavity (1) in a water-impregnated rock mass, said liquid being the liquid phase of a substance which is a gas at ordinary temperature, which liquefies under pressure, which has a density which is less than the density of water and which is immiscible with water, said liquid being at the liquid-gas equilibrium pressure applicable to the ambient temperature, one end (81) of said insertion tube (8) opening out into the top of said cavity (1) above the gas-liquid interface (10), the safety device being characterized in that a can (9) which is open at its top and which has a section larger than that of said insertion tube (8) is disposed around said end (81) of said insertion tube (8) such that the bottom of said can (9) is close to said end (81) without touching it, the volume of the can (9) being greater than the volume of the water column which would bring the pressure inside said insertion tube (8) into equilibrium with the pressure of the substance inside said cavity (1).

# Fig. 1

# Fig. 2